# EUROPÄISCHE PATENTSCHRIFT

(11) **EP 0 828 448 B1**
(45) Veröffentlichungstag und Bekanntmachung des Hinweises auf die Patenterteilung: **27.02.2002**
(21) Anmeldenummer: 95936526.3
(22) Anmeldetag: 20.10.1995
(51) Int. Cl.: A47J 31/057

(54) **VERFAHREN ZUR ZUBEREITUNG VON KAFFEE UND KAFFEEMASCHINE HIERZU**
COFFEE-MAKING PROCESS AND CORRESPONDING COFFEE-MAKING MACHINE
PROCEDE DE PREPARATION DE CAFE ET MACHINE A CAFE CORRESPONDANTE

(30) Priorität: 01.06.1995 DE 19520121
(43) Veröffentlichungstag der Anmeldung: 18.03.1998
(73) Patentinhaber: Braun GmbH, Kronberg (DE)
(72) Erfinder: SCHAMBERG, Stefan, D-61250 Usingen (DE); STÜCHER, Reinhard, D-57258 Freudenberg (DE); TREBITZ, Bernd, D-61350 Bad Homburg (DE); KLEEMANN, Christof, D-65510 Idstein (DE); DRIESEN, Georges, D-61276 Weilrod (DE); AMSEL, Klaus, D-61440 Oberursel (DE)
(86) Internationale Anmeldenummer: EP9504112
(87) Internationale Veröffentlichungsnummer: WO9638077

(56) Entgegenhaltungen:
- EP-A- 0 101 606
- EP-A- 0 484 060
- DE-A- 2 952 556
- DE-A- 4 240 429
- DE-B- 2 856 491
- FR-A- 2 419 704
- GB-A- 2 113 813

## Beschreibung

Die Erfindung betrifft eine Kaffeemaschine zur Zubereitung von Kaffee gemäß den Merkmalen des Oberbegriff des Patentanspruchs 1.

Die Zubereitung von Kaffee erfolgt in der Regel mit Vorrichtungen, die einen Wasserbehälter und einen elektrischen Durchlauferhitzer haben, wobei das erhitzte Wasser von oben her in einen Kaffeefilter gefördert wird, der mit dem zu extrahierenden Kaffeemehl gefüllt ist. Hierbei stellt sich das Problem, daß die anfänglich erhitzte und geförderte Wassermenge von ca. 80 ml in aller Regel eine Temperatur von 80° C nicht erreicht. Dies hat zur Folge, daß das relativ kalte Wasser die Oberfläche des Kaffeemehls nur schlecht benetzen und daher auch kaum extrahieren kann und dadurch nahezu unverändert durch den Kaffeefilter in den Auffangbehälter gelangt.

Wird eine größere Menge an Kaffee zubereitet, so kann dieses anfänglich schwache und wenig aromatische Extrakt durch die nachfolgende größere Menge an Extrakt, das sich bedingt durch ausreichend heißes Wasser und ausreichend lange Extraktionszeit durch ein intensives Aroma auszeichnet, ohne großen Geschmacksverlust ausgeglichen werden.

Wird jedoch nur eine kleinere Menge, beispielsweise 2 oder 3 Tassen Kaffee, zubereitet, so wird dieses Getränk von Experten und Laien im allgemeinen als im Aroma flacher bezeichnet. Die Ursache liegt darin, daß bei Zubereitung kleiner Mengen die Extraktionszeit relativ kurz ist und schwerer lösliche Substanzen wie z.B. Säuren, die erheblich zur Aromaverbesserung beitragen, erst nach längerer Extraktionszeit in Lösung gehen, so daß bei der Zubereitung kleinerer Mengen sich nur ein Teil des Aromas entfalten kann.

Zur Vermeidung dieses Nachteils ist es bereits bekannt, bei der Zubereitung von Kaffee die Extraktionszeit dadurch zu verlängern, daß die Zufuhr von Heißwasser in den Kaffeefilter zeitweise unterbrochen wird. Bei einem aus der DE-AS 11 66 988 bekannten Automaten zum Aufbrühen von Kaffee unter Benutzung eines den gemahlenen Kaffee aufnehmenden Siebfilters liefert der Automat ununterbrochen heißes Wasser, wobei in das zum Siebfilter führende Auslaufrohr ein elektromagnetisch betätigtes Ventil eingeschaltet ist, mit dem das Auslaufen des Heißwassers zeitweilig unterbrochen werden kann. Der das Magnetventil steuernde Schalter wird dabei über zwei auf einer Welle sitzende Nockenscheiben betätigt, wobei die Welle mit Hilfe eines Motors gedreht wird. Dieser bekannte Automat hat zum einen den Nachteil, daß er zum Antrieb der Welle mit Nocken einen Motor benötigt und zum anderen, daß sein Heißwassererzeuger ständig unter Dampfdruck steht; sowohl der Motor mit Nockenwelle als auch der Heißwassererzeuger mit seinen notwendigen Sicherheitseinrichtungen sind kostspielige Aggregate, weshalb dieser Automat nur für kommerzielle Zwecke einsetzbar ist.

Weiterhin ist aus der DE-AS 20 58 824 eine Vorrichtung zum Bereiten von Kaffee bekannt, bei der das Hauptheizelement mittels einer Skala am Thermostaten entsprechend je einer vorgewählten Brühwassermenge auf je eine Ausschalttemperatur einstellbar und für bestimmte Förderpausen bei für jede vorgewählte Brühwassermenge annähemd konstanter Gesamtbrühzeit durch Ansprechen des Thermostaten selbsttätig abschaltbar ist. Bei dieser Kaffeemaschine wird das dem Brühgefäß zugeführte Wasser, unabhängig davon, welche Kaffeemenge bereitet wird, stets etwa gleich lange mit der Kaffeeschicht in Berührung gehalten, so daß bei jeder Menge ein starker, aromaintensiver Kaffee herstellbar ist.

Aus der DE-A-42 40 429 ist weiterhin eine Espressomaschine bekannt, bei der eine Einrichtung zur Vorwärmung der Filterzentrifuge vorgesehen ist. Dabei ist dem beheizten Durchlauferhitzer ein den Wasserdurchfluß steuerndes Ventil vorgeschaltet. Bei der Verwendung des kleineren Querschnittes am Ventil wird Dampf zur Aufheizung der Filterzentrifuge erzeugt, während bei der Verwendung des vollen Querschnittes heißes Wasser zum Aufbrühen des Kaffeemehls hergestellt wird. Zur Aufwärmung der Filterzentrifuge wird der Dampf zunächst über eine Steigleitung in einen Sammelbehälter geleitet, von wo er über ein Entlüftungsrohr in das die Filterzentrifuge umgebende Gehäuse eingeleitet wird. Dabei wird der das Kaffeemehl aufnehmende Rotationsbehälter von außen erwärmt, damit das beim Zentrifugieren mit der vorgewärmten Schale des Rotationsbehälters in Kontakt gebrachte Kaffeegetränk nicht allzu schnell abkühlt.

Schließlich ist aus der FR-A-2419704 eine Kaffeemaschine bekannt, bei der ein von der Temperatur des Durchlauferhitzers gesteuertes Auslaßventil sich bei der Vordampfphase in einer ersten Stellung befindet, in der aufgrund des kleinen Durchlaßquerschnitts nur geringe Mengen an Wasser auslaufen können. Diese geringe Wassermenge führt zu einer vollständigen Verdampfung des Wassers im Durchlauferhitzer. Durch stetiges Nachfließen von wenig Wasser setzt eine kontinuierliche Dampfentwicklung ein, der dann über das Steigrohr in den mit Kaffeemehl gefüllten Kaffeefilter gelangt und dort das Kaffeemehl mit Dampf beaufschlagt. Das mit dem Dampf beaufschlagte Kaffeemehl läßt sich anschließend, wenn das Auslaßventil zum Eintritt in die Brühphase in seine zweite Stellung bewegt worden ist und nunmehr statt Dampf heißes Wasser auf das Kaffeemehl gefördert wird, mit dem heißen Wasser so gut benetzen, daß die Extraktion sehr schnell und wirkungsvoll abläuft und daß man dadurch ein aromaintensives Heißgetränk, insbesondere auch bei der Zubereitung von kleinen Mengen an Kaffee, erhält. Die Steuerung des Auslaßventils erfolgt dabei über ein die Strahlungswärme des Durchlauferhitzers aufnehmendes Thermoelement, das sich bei dessen Erwärmung verformt und dabei die Verformung auf den Ventilstößel überträgt.

Der Erfindung liegt die Aufgabe zugrunde, eine Kaffeemaschine anzugeben, mit welcher auf einfache Weise die Zubereitung eines aromaintensiven und wohlschmeckenden Kaffees, insbesondere bei der Zubereitung kleinerer Mengen, ermöglicht wird. Dabei soll die Kaffeemaschine einfach und kostengünstig in ihrer Herstellung sein.

Diese Aufgabe wird erfindungsgemäß durch die Merkmale des kennzeichnenden Teils des Patentanspruchs 1 gelöst. Dabei wird das Kaffeemehl mit Dampf bzw. mit einem Dampf-Heißwassergemisch beaufschlagt, bevor zumindest die wesentliche Menge des heißen bzw. siedenden Wassers durch das Kaffeemehl hindurchgeleitet wird. Bei dem erfindungsgemäßen Verfahren wird dem Kaffeemehl gleich zu Beginn des Extraktionsvorgangs durch Dampf bzw. durch ein Dampf-Heißwassergemisch Wärmeenergie zugeführt. Dabei hat sich überraschenderweise gezeigt, daß durch diesen zusätzlichen Energieeintrag das Kaffeemehl für den nachfolgenden Extraktionsvorgang mit Wasser besser aufgeschlossen und die Löslichkeit der aromabildenden Substanzen im Kaffeemehl erhöht wird. Der meßbare Extraktionsgehalt und die Beurteilung der Qualität des in erfindungsgemäßer Weise zubereiteten Kaffeegetränkes durch sensorische Prüfung ergaben, insbesondere bei der Zubereitung kleinerer Mengen eine deutliche Verbesserung gegenüber Kaffeegetränken, die nach einem Verfahren ohne Vorbedampfung des Kaffeemehls zubereitet worden sind.

Durch eine Dampf-Heißwassergemisch-Vorlage im Kaffeemehl wird das Kaffeemehl wesentlich schneller erwärmt, als wenn nur eine reine Dampfbeaufschlagung auf das Kaffeemehl geführt wird. Durch diese Maßnahme ergibt sich eine deutliche Extraktionserhöhung des Kaffeemehls. In Verbindung mit der Dampfbeaufschlagung entsteht in der Küche bzw. in dem Raum, in dem der Kaffee zubereitet wird, bereits zu Anfang der eigentlichen Brühphase eine Art "Kaffeehaus-Duft", durch den eine Bedienungsperson zum Kaffeetrinken angeregt wird.

Durch die Dampfbeaufschlagung bzw. durch die Dampf-Heißwassergemisch-Beaufschlagung des Kaffeemehls und dem nachgeschalteten, allgemein bekannten Brühprozeß entsteht - unabhängig von der zubereiteten Kaffeemenge - ein gleichbleibend gutes Aroma im Kaffee. Auch wird hierdurch eine deutliche Geschmacksverbesserung, vor allem bei kleinen Mengen, erreicht, d.h., insbesondere bei kleinen Kaffeemengen wird das Kaffeemehl so gut ausgenutzt, wie dies nur bei größeren zuzubereitenden Kaffeemengen der Fall ist.

Als besonders günstig hat es sich erwiesen, wenn die Beaufschlagung des Kaffeemehls mit Dampf über eine Zeitdauer von 30 s bis 90 s erfolgt. Gegenüber dem bekannten Unterbrechen der Extraktion wird bei dem erfindungsgemäßen Verfahren die Zubereitungszeit, vornehmlich bei der Bereitung kleiner Mengen, deutlich verkürzt. Des weiteren betrifft die Erfindung eine Kaffeemaschine mit einem Durchlauferhitzer, dessen Wassereinlauf über ein Rückschlagventil mit dem Wasserbehälter verbunden ist und dessen Wasserauslauf über eine Steigleitung mit, einem Kaffeefilter zur Aufnahme des Kaffeemehls in Verbindung steht, so daß das in den Kaffeefilter einfließende heiße Wasser das Kaffeemehl extrahiert und als Kaffeegetränk aus dem Kaffeefilter in ein darunter abgestelltes Auffanggefäß abfließt.

Nach der Erfindung läßt sich ohne großen technischen Aufwand ein von der Temperatur des Dampfes gesteuertes Auslaßventil in der Kaffeemaschine realisieren. Dabei gibt das Auslaßventil erst dann seine zweite Stellung frei, wenn eine bestimmte Zeit verstrichen ist, in der das Kaffeemehl mit Dampf bzw. einem Dampf-Heißwassergemisch beaufschlagt wurde. Hierdurch wird eine in ihrem Aufbau besonders einfach und sicher arbeitende, temperaturabhängige Ventilsteuerungseinrichtung gesteuert, durch die nach einer vorgegebenen Zeit der Kaltwassereinlauf zum Durchlauferhitzer vom Wasserbehälter her vom kleinen Durchlaßquerschnitt auf den großen Durchlaßquerschnitt freigegeben wird. Dabei sitzt die in Abhängigkeit der Temperatur des Dampfes arbeitende Ventilsteuerungseinrichtung mit dem Auslaßventil in einem Querrohr, das den Wassereinlaß mit dem Wasserauslaß direkt verbindet, also im wesentlichen parallel zum Durchlauferhitzer verläuft (Anspruch 2).

Eine derartige Ventilsteuerungseinrichtung kann aber auch elektrisch ausgeführt sein, indem ein am Wasserauslaß angeordneter elektrischer Temperaturfühler ein elektromagnetisch betätigbares Auslaßventil steuert. Bei dieser Ausführung ist es von geringerer Bedeutung, wo sich der Wassereinlaß und der Wasserauslaß in der Kaffeemaschine befinden, da Temperaturfühler und Ventil beliebig weit auseinandergesetzt werden können und lediglich über elektrische Anschlußdrähte miteinander verbunden sind.

Nach den Merkmalen des Patentanspruchs 3 wird das temperaturempfindliche Element von einem "Shape-Memory-Metall" oder einem Bimetall gebildet. Das "Shape-Memory-Metall" oder auch "Form-Gedächtnis-Legierung" genannt, besteht vorzugsweise aus einer Nikkel-Titan-Legierung. Derartige Metalle verformen sich erst bei einer bestimmt vorgegebenen Temperatur, ähnlich wie eine Schnappfeder, so daß das Auslaßventil schlagartig öffnet. Dies ist auch erforderlich, da bei einem eventuell kontinuierlich öffnenden Auslaßventil bereits nach kurzer Zeit dieses mehr und mehr öffnet und daher eine zu große Wassermenge in den Durchlauferhitzer fließen würde, die eine nicht mehr ausreichende Dampfmenge, sondern schon zuviel Heißwasser im Durchlauferhitzer erzeugen könnte. Im anderen Extremfall müßte das Ventil sehr langsam öffnen, was die Einleitung der Brühphase verzögern würde. Diese Nachteile werden durch das "Shape-Memory-Metall" vermieden, das bei einer vorgegebenen Temperatur schlagartig öffnet.

Nach den Merkmalen des Patentanspruchs 4 wird das Auslaßventil selbsttätig durch die Kraft der Rückstellfeder in seine Schließstellung gebracht, wenn das "Shape-Memory-Metall" sich wieder nach seiner Abkühlung schlagartig zusammenzieht.

Damit das "Shape-Memory-Metall" in Abhängigkeit der Temperatur des Dampfes am Rohrstutzen gesteuert werden kann, sind die Merkmale des Patentanspruchs 5 vorgesehen. Damit die Temperatur nicht allzu schnell auf das "Shape-Memory-Metall" einwirkt, ist dieses von einer Hülse umgeben, deren Ende von einer Wand verschlossen ist. Dabei ist die Dicke der Wand so bemessen, daß nach einer bestimmt vorgegebenen Zeit das "Shape-Memory-Metall" die Öffnung des Auslaßventils auslöst.

Durch die Merkmale des Patentanspruchs 6 wird ein besonders einfaches Auslaßventil gebildet, das in seiner Schließstellung den großen Durchlaßquerschnitt verschließt, während der kleine Durchlaßquerschnitt geöffnet bleibt.

Durch die Merkmale des Patentanspruchs 7 wird in dem Rohrstutzen ein besonders einfacher Ventilsitz geschaffen, der gleichzeitig zur Führung des Stößels dient und der über eine am Rohrstutzen ausgebildete Öffnung in den Kanal hineinragt und hierdurch den Wasserdurchfluß zum Durchlauferhitzer hin steuert.

Eine Vorwärmung des Kaffeemehls läßt sich durch Beaufschlagung des Kaffeemehls mit etwas Wasser vor der eigentlichen Dampfbeaufschlagung erreichen (Anspruch 8). Bei der Dampferzeugung wird die Heizleistung des Durchlauferhitzers der Einfachheit halber nicht heruntergesetzt. Der Durchlauferhitzer ist hierbei weiterhin von dem Thermostaten temperaturgesteuert, d.h., die am Durchlauferhitzer in der Dampfphase entstehende Wärme darf nicht so stark sein, daß der Thermostat den Durchlauferhitzer abschaltet. Zur besseren Temperaturregelung der Dampf- und Heißwasserphase können aber auch zwei Thermostaten am Durchlauferhitzer ausgebildet sein, von denen der erst bei höherer Temperatur abschaltende Thermostat die Dampfphase und der bei niederer Temperatur abschaltende Thermostat die eigentliche Brühphase steuert.

Um die Dampfentwicklung sogleich mit dem Einschalten des Geräts bewirken zu können, kann das Auslaßventil des Wasserbehälters in seiner Grundstellung geschlossen und durch das Einschalten des Durchlauferhitzers in eine Offenstellung mit kleinem Durchlaßquerschnitt steuerbar sein (Anspruch 9). Hierdurch ist sichergestellt, daß der Durchlauferhitzer beim Füllen des Wasserbehälters trocken bleibt und nicht voll Wasser läuft, bevor die zum Verdampfen notwendige Temperatur erreicht ist.

Die Erfindung wird nachfolgend anhand von mehreren Ausführungsbeispielen näher erläutert, die in der Zeichnung dargestellt sind. Es zeigen:
- Fig. 1: eine schematische Darstellung einer Kaffeemaschine mit einem zwei Magnetventile umfassenden Auslaßventil,
- Fig. 2: einen Längsschnitt durch eine mittels thermischer Ausdehnung eines Metalls gesteuerte Ventilsteuerungseinrichtung nach der Erfindung in vergrößertem Maßstab, die Teil einer Kaffeemaschine ist und
- Fig. 3: den Temperatur-Zeit-Verlauf einer konventionell und nach der Erfindung arbeitenden Kaffeemaschine.

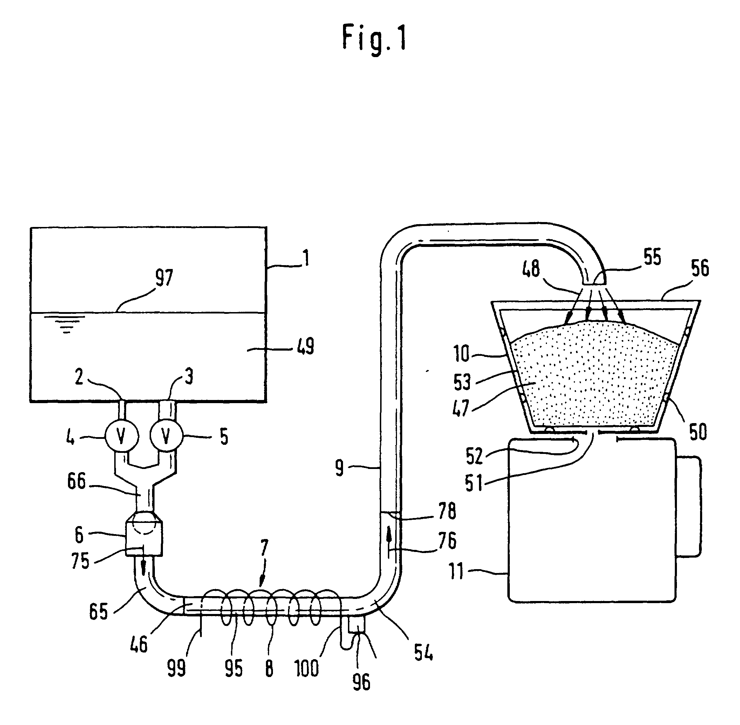

Die in Fig. 1 als Prinzipskizze dargestellte Kaffeemaschine hat einen mit Wasser 49 füllbaren Wasserbehälter 1 mit Auslaßöffnungen 2, 3, die jeweils durch ein Ventil 4, 5 verschließbar sind. Die Auslässe der beiden Ventile 4, 5 sind gemeinsam über die Leitung 66 an ein Rückschlagventil 6 angeschlossen, das den Durchfluß in Richtung auf die Ventile 4, 5 sperrt. An der Auslaßseite schließt sich an das Rückschlagventil 6 ein Rohr 65 an, an das sich wiederum der Wassereinlauf 46 eines Durchlauferhitzers 7 mit einem Heizelement 8 anschließt.

Von dem Durchlauferhitzer 7 führt über einen Wasserauslauf 54 ein Steigrohr 9 zu einem Kaffeefilter 10, der oberhalb einer Kanne 11 angeordnet ist. Der Ausgang 55 des Steigrohres 9 ist oberhalb der Filteröffnung 56 und oberhalb des Kaffeemehls 47 angeordnet. Der Kaffeefilter 10 weist einen Auslaß 51 auf, über den das Filtrat in die Öffnung 52 der Kanne 11 einfließt. In dem Kaffeefilter 10 ist ein bei Kaffeemaschinen üblicherweise verwendeter Papierfilter 53 eingesetzt, der über Abstandselemente 50 gegenüber der Innenwand des Kaffeefilters 10 auf geringem Abstand gehalten wird, damit das Brühgetränk zum Auslaß 51 abfließen kann. In dem Papierfilter 53 befindet sich Kaffeemehl 47.

Die Auslaßöffnung 2 hat einen Durchlaßquerschnitt, der so klein bemessen ist, daß bei geöffnetem Ventil 4 dem Durchlauferhitzer 7 eine so geringe Wassermenge in der Zeiteinheit zugeführt wird, daß das Wasser vollständig verdampft. Der erzeugte Dampf wird über das Steigrohr 9 auf das in dem Kaffeefilter 10 befindliche Kaffeemehl geleitet, wodurch dieses erhitzt und für den nachfolgenden Extraktionsvorgang vorbereitet wird. Die Auslaßöffnung 3 hat einen Durchlaßquerschnitt üblicher Größe, wie er für das Erhitzen und Fördern durch Dampfblasenbildung mit Hilfe des Durchlauferhitzers 7 zweckmäßig ist. Die Auslaßöffnung 3 wird mit Hilfe des Ventils 5 geöffnet, sobald das Kaffeemehl durch das Bedampfen für den Extraktionsvorgang genügend aufgeschlossen ist. Versuche haben gezeigt, daß ein Bedampfen des Kaffeemehls während einer Zeitdauer von 30 s bis 90 s vor dem Brühen zu guten Ergebnissen führt.

Die Ventile 4, 5 sind in ihrer Grundstellung geschlossen und werden mit Hilfe von Elektromagneten in ihre Offenstellung bewegt. Beim Einfüllen von frischem Wasser 49 in den Wasserbehälter 1 bleibt daher der Durchlauferhitzer 7 trocken. Mit dem Einschalten des Geräts wird gleichzeitig das Ventil 4 in die Offenstellung gesteuert, so daß zunächst die Dampfentwicklung beginnt. Mit Hilfe eines elektrischen oder thermostatischen Zeitglieds wird das Ventil 5 zu einem vorbestimmten späteren Zeitpunkt aufgesteuert. Durch das Öffnen des Ventils 5 gelangt eine größere Wassermenge in den Durchlauferhitzer 7, wodurch der Bedampfungsvorgang beendet und der übliche Brühvorgang eingeleitet wird. Das Ventil 4 kann in dieser Betriebsphase geöffnet bleiben. Es kann jedoch auch vorgesehen sein, gleichzeitig mit der Ansteuerung des Ventils 5 die Ansteuerung des Ventils 4 zu beenden, so daß dieses wieder in seine Schließstellung zurückkehrt.

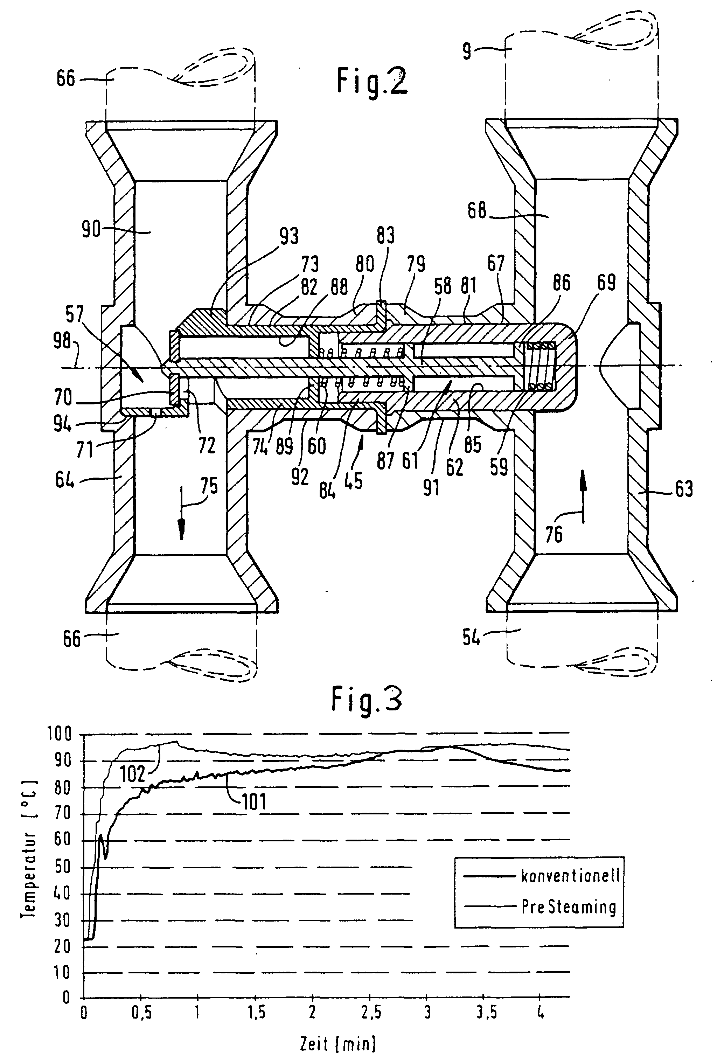

Aus Fig. 2 ist eine das Auslaßventil 57 steuemde Ventilbetätigungseinrichtung nach der Erfindung dargestellt, die im wesentlichen aus zwei senkrecht im Abstand und parallel zueinander verlaufenden Rohrstutzen 63, 64 besteht. Der Rohrstutzen 64 wird beispielsweise in der Leitung 66 angeschlossen, während der Rohrstutzen 63 an der Verbindungsstelle 78 zwischen dem Wasserauslauf 54 und dem Steigrohr 9 angeschlossen werden kann, d.h., der Rohrstutzen 64 führt das vom Wasserbehälter 1 kommende Kaltwasser 49, während der Rohrstutzen 63 das bereits im Durchlauferhitzer 7 erhitzte Heißwasser bzw. den Heißdampf zum Kaffeemehl 47 (Fig. 1) leitet. Die Fließrichtung des Kaltwassers wird durch den Pfeil 75 und die Fließrichtung des Heißdampfes bzw. Heißwassers durch den Pfeil 76 angezeigt.

Die Rohrabschnitte 63, 64 weisen nach Fig. 2 zueinander ausgerichtete Öffnungen 67, 73 auf, an die sich Rohrstücke 79, 80 anschließen. Das Rohrstück 79 ist mit einer Bohrung 81 versehen, in der eine Hülse 62 eingepreßt ist. Das Rohrstück 80 weist ebenfalls eine Bohrung 82 auf, in der ein Ventilgehäuse 74 eingepreßt ist. Das Ventilgehäuse 74 ragt an dem freien Ende des Rohrstückes 80 heraus und erweitert sich radial nach außen über einen Ringbund 83. Von der Hülse 62 ragt noch ein Endabschnitt 84 in das Ventilgehäuse 74 hinein und ist ebenfalls mit diesem Teil verpreßt. Hierdurch sind die Hülse 62, das Ventilgehäuse 74 und die Rohrstücke 79, 80 fest miteinander verbunden, wobei letztere zueinander fluchten und eine gemeinsame Mittellinie 98 bilden. Die Hülse 62 weist weiterhin eine Bohrung 85 auf, in der zwei am Stößel 58 ausgebildete Ringstufen 86, 87 gleitend geführt werden. Das Ventilgehäuse 74 ist mit einer Bohrung 88 versehen, die am gegenüberliegenden Ende des Endabschnittes 84 einen Ringbund 89 aufweist, der dichtend an der Oberfläche des Stößels 58 anliegt. Zwischen dem Ringbund 89 und der Ringstufe 87 ist eine Rückstellfeder 60 ausgebildet, die das Auslaßventil 57 in die in der Fig. 8 dargestellte Schließstellung bewegt, wenn sich die Kaffeemaschine in ihrer Dampfphase bzw. in ihrem nicht benutzten Zustand befindet. Unter Schließstellung des Auslaßventils 57 ist dabei zu verstehen, daß der kleine Durchlaßquerschnitt 71 nur den Weg vom Wasserbehälter 1 zum Durchlauferhitzer 7 (Fig. 1) freigibt.

Zwischen der Ringstufe 86 und der die Hülse 62 am freien Ende verschließenden Wand 69 ist in der Bohrung 85 ein aus einer "Form-Gedächtnis-Legierung" bestehendes Metallelement 59 ausgebildet, das sich an der einen Seite an der Wand 69 und an der anderen Seite an der Ringstufe 86 abstützt. Der Abschnitt 61 ist von der einen Seite her über die Wand 69 und von der anderen Seite her über den Ringbund 89 gegenüber den wasserführenden Kanälen 68, 90 gedichtet.

Die Rohrstücke 79, 80 weisen nach Fig. 2 je eine Einschnürung 91, 92 auf, die als elastische Dehnelemente während des Betriebs der Kaffeemaschine dienen, damit die vom Durchlauferhitzer 7 und den Leitungen 66, 65, 54, 9 ausgehenden Wärmeausdehnungen in diesem Bereich abgefangen werden können.

Das Ventilgehäuse 74 ragt nach Fig. 2 mit seinem Endabschnitt 93 in den Kanal 90 des Rohrstutzens 64 hinein und stützt sich am Rand der Wandung über die Stufe 94 ab. Der Endabschnitt 93 bildet somit eine im Kanal 90 ausgebildete Wand, die nur über den großen Durchlaßquerschnitt 72 und den kleinen Durchlaßquerschnitt 71 die Verbindung zum Durchlauferhitzer 7 (Fig. 1) herstellt.

Das dem Metallelement 59 gegenüberliegende Ende des Stößels 58 ist mit einem als Ringscheibe ausgebildeten Dichtelement 70 versehen, das in der in Fig. 8 gezeigten Schließstellung den großen Durchlaßquerschnitt 72 verschließt. Das Dichtelement 70 ist aus flexiblem und wasserbeständigem Dichtmaterial hergestellt. Die Hülse 62 ist aus Polypropylen oder einem ähnlich kostengünstigen Kunststoff hergestellt. Gleiches gilt für die restlichen Bauteile der in Fig. 2 gezeigten Ventilbetätigungseinrichtung 45 mit Ausnhame der Rückstellfeder 60 und dem Metallelement 59. Die Rückstellfeder 60 besteht nämlich aus Federstahldraht und das Metallelement 59 aus einer Nickel-Titanlegierung mit Form-Gedächtnis-Charakter.

Die Wirkungsweise der in Fig. 2 dargestellten Ventilbetätigungseinrichtung 45 in Verbindung mit der Kaffeemaschine nach Fig. 1, allerdings ohne das dort gezeigte Ventil 4, 5, ist folgende:

Sobald der Wasserbehälter 1 mit Wasser 49 gefüllt ist, fließt das Wasser über die Leitung 66 in den Rohrstutzen 44 und von dort in geringer Menge über die Öffnung mit kleinerem Durchlaßquerschnitt 71. Das Auslaßventil 57 ist geschlossen. Das in Fig. 1 dargestellte Rückschlagventil 6 kann entweder an der Einlaufseite oder an der Auslaufseite des Rohrstutzens 64 ausgebildet sein.

Nachdem das Wasser den kleineren Durchlaßquerschnitt 71 passiert hat, fließt es über das Zwischenrohr 65 in den Durchlauferhitzer 7 (Fig. 1), von dort über den Wasser auslauf 54 in den Rohrstutzen 63 und von dort letztendlich in das Steigrohr 9, allerdings nur bis zu einer Höhe, die der des Wasserspiegels 97 des im Wasserbehälter 1 befindlichen Wassers 49 entspricht. Wird nun die Kaffeemaschine über einen in der Zeichnung nicht dargestellten Ein-/Ausschalter eingeschaltet, so wird das elektrische Heizelement 8 über die Anschlüsse 99, 100 mit Strom versorgt, das sich somit aufheizt. An dieser Stelle sei noch erwähnt, daß der Durchlauferhitzer 7 aus einem aus gut wärmeleitenden Metall bestehenden Wasserrohr 95 und einem mit diesem über eine Löt- bzw. Schweißverbindung in gutem Wärmekontakt stehenden Rohrheizkörper 8 besteht, wie beispielsweise Aluminium oder Kupfer.

Die im Rohrheizkörper 8 entstehende Wärme wird auf das Wasserrohr 95 übertragen, so daß das im Wasserrohr 95 befindliche Wasser so lange erhitzt wird, bis Dampfblasen entstehen. Dabei wird durch die im Rohr 65 entstehende leichte Druckerhöhung das Rückschlagventil 6 geschlossen und die Dampfblasen (nicht dargestellt) können nur noch über das Steigrohr 9 zum Ausgang 55 wandern und nehmen dabei das im Leitungssystem 95, 54, 63, 9 befindliche Wasser mit zum Ausgang 55. Dieses noch kalte Wasser (Vorlage) fließt über das Kaffeemehl 47 und benetzt dieses bzw. feuchtet das Kaffeemehl 47 an. Sobald die im Rohrsystem aufgestaute Wassermenge weniger wird, kann nunmehr weniger Wasser über den kleinen Durchlaßquerschnitt 71 nachfließen. Dabei bildet sich im Durchlauferhitzer 7 aufgrund der verhältnismäßig hohen Heizleistung der Heizeinrichtung 8 soviel Dampf, daß dieser mit höherer Strömungsgeschwindigkeit zum Ausgang 55 und anschließend direkt auf die Oberfläche des Kaffeemehls 47 geleitet wird. Hierdurch wird das Kaffeemehl nicht nur an der äußeren, zum Ausgang 55 zeigenden Fläche, sondern auch nach innen hin erwärmt.

Diese Erwärmung wird noch durch den zuvor auf das Kaffeemehl 47 abgegebenen Wasseranteil (Vorlage) beschleunigt.

Der durch den Rohrstutzen 63 strömende Dampf erwärmt dabei den im Kanal 68 liegenden Bereich der Hülse 62, die ihrerseits ein Teil der Wärme auf das Metallelement 59 überträgt, das sich somit langsam erwärmt. Sobald dieses Metallelement 59 seine Ausdehnungstemperatur erreicht hat, was bei den vorliegenden Abmessungen und Werkstoffen etwa einer Dampfbeaufschlagungszeit der Hülse 62 von 30 bis 60 s entspricht, dehnt sich das Metallelement 59 schlagartig aus und verschiebt dabei den Stößel 58 in der Zeichnung nach Fig. 2 nach links gegen die Rückstellkraft der Rückstellfeder 60. Bei dieser Verschiebung wird das Dichtelement 70 vom Stößel 58 soweit verschoben, daß der große Durchlaßquerschnitt 72 geöffnet wird und das vom Wasserbehälter 1 kommende Wasser sowohl über den kleinen wie großen Durchlaßquerschnitt 71, 72 zum Durchlauferhitzer 7 fließt.

Da das Wasserrohr 95 nunmehr zusätzlich vom großen Durchlaßquerschnitt 72 des Auslaßventils 57 wesentlich mehr Wasser erhält, wird vorwiegend nur noch Wasser erhitzt und über die bei der Erhitzung des Wassers entstehenden Dampfblasen zum Ausgang 55 schubweise gefördert, so wie dies bei den selbstfördemden Durchlauferhitzern bei herkömmlichen Kaffeemaschinen der Fall ist. Der eigentliche Vordampfvorgang ist beendet und es hat der eigentliche Brühvorgang begonnen.

Das nunmehr auf die Oberfläche des Kaffeemehls 47 (Fig. 1) auftreffende Heißwasser wird von dem angefeuchteten und vorgewärmten Kaffeemehl 47 wesentlich besser aufgenommen und die Extraktion wird hierdurch gesteigert. Das am Auslaß 51 des Kaffeefilters 10 abfließende Kaffeegetränk fließt anschließend über die Öffnung 52 in die Kanne 11. Das Auslaßventil 57 bleibt so lange geöffnet, solange heißes Wasser vom Durchlauferhitzer 7 über den Rohrstutzen 63 zum Ausgang 55 gefördert wird.

Nach Beendigung des Brühvorgangs, also wenn das ganze Wasser 49 aus dem Wasserbehälter 1 abgelaufen ist, werden die letzten Tropfen durch Dampfblasenbildung aus dem Durchlauferhitzer 7 herausgefördert, bis der den Durchlauferhitzer 7 steuernde Thermostat 96, der in gutem Wärmekontakt mit dem Durchlauferhitzer 7 steht, den Rohrheizkörper 8 abschaltet. Sobald die Temperatur im Kanal 68 und somit auch die Temperatur im Bereich der Wand 69 der Hülse 62 sich abgekühlt haben, zieht sich das Metallelement 59 schlagartig wieder zusammen. Durch die Rückstellkraft der Rückstellfeder 60 wird der Stößel 58 nach Fig. 2 wieder nach rechts betätigt, bis das Dichtelement 70 den großen Durchlaßquerschnitt 72 wieder verschließt. Es ist nunmehr wieder der Wasserbehälter 1 nur über den kleinen Durchlaßquerschnitt 71 mit dem Wasserrohr 95 des Durchlauferhitzers 7 verbunden. Ein neuer Brühvorgang kann beginnen.

In Fig. 3 wurde nochmals der Temperaturverlauf in einem Temperatur-Zeit-Diagramm einer herkömmlichen Kaffeemaschine mit einer nach der Erfindung hergestellten Kaffeemaschine dargestellt. Die untere dicke Linie 101 zeigt den Temperaturverlauf des Kaffeemehls in Abhängigkeit der Brühzeit für eine konventionelle Kaffeemaschine und die obere dünne Linie 102 den Temperaturverlauf im Kaffeemehl in Abhängigkeit der Brühzeit für eine nach der Erfindung hergestellte Kaffeemaschine.

Aus dem Temperaturverlauf nach Fig. 3 ergibt sich, daß in der ersten Minute vom Brühbeginn an im Kaffeemehl stets eine höhere Temperatur für die nach der Erfindung hergestellte Kaffeemaschine vorliegt als bei'einer herkömmlichen Kaffeemaschine. Der Temperaturunterschied beträgt dabei maximal etwa 18° C. Zwar gleicht sich die Temperatur des Kaffeemehls bei der nach der Erfindung hergestellten Kaffeemaschine im Laufe der Brühzeit der Temperatur des Kaffeemehls einer herkömmlichen Kaffeemaschine an, was sich dadurch erklären läßt, daß nach etwa 1 Minute nunmehr etwa ebenso heißes Wasser auf das Kaffeemehl einwirkt, wie bei einer herkömmlichen Kaffeemaschine. Nach etwa 2,5 Minuten Brühzeit sind die Temperaturen des Kaffeemehls beider Kaffeemaschinen nahezu gleich.

Durch die Erfindung wird gerade am Anfang durch den Heißdampf das Kaffeemehl wesentlich schneller erwärmt und angefeuchtet als bei einer herkömmlichen Kaffeemaschine, was insbesondere bei kleinen Mengen an Kaffee von Vorteil ist; denn hier ist bekanntlich der Brühvorgang aufgrund der geringen Wassermenge in sehr kurzer Zeit abgeschlossen. Durch die Erfindung wird ein Kaffee mit gleichbleibend gutem Aroma, unabhängig von der zubereiteten Kaffeemenge, hergestellt, der wohlschmeckend ist und wenig Bitteranteile aufweist.

## Patentansprüche

1. Kaffeemaschine mit einem Durchlauferhitzer (7), dessen Wassereinlauf (46) über ein Rückschlagventil (6) mit dem Wasserbehälter (1; 12) verbunden ist und dessen Wasserauslauf (54) über eine Steigleitung (9) mit einem Kaffeefilter (10) zur Aufnahme des Kaffeemehls (47) in Verbindung steht, so daß in den Kaffeefilter (10) einfließendes heißes Wasser das Kaffeemehl (47) extrahiert und als Kaffee aus dem Kaffeefilter (10) in ein Auffanggefäß (11) abfließt, wobei im Strömungsweg zwischen dem Wasserbehälter (1; 12) und der Steigleitung (9) ein von der Temperatur steuerbares Auslaßventil (57) angeordnet ist, welches in einer ersten Stellung einen kleinen Durchlaßquerschnitt (71) hat, der so klein bemessen ist, daß die austretende Wassermenge im Durchlauferhitzer (7) vollständig verdampft und von dort als Dampf bzw. als Dampf-Heißwassergemisch in den Kaffeefilter (10) fließt, und welches in einer zweiten Stellung einen großen Durchlaßquerschnitt (72) hat, der wenigstens so groß bemessen ist, daß die austretende Wassermenge im Durchlauferhitzer (7) ohne nennenswerte Dampfentwicklung erhitzt wird und in den Kaffeefilter (10) fließt,
**dadurch gekennzeichnet,**
**daß** das Auslaßventil (57) von der Temperataur des Dampfes gesteuert wird und erst dann in die zweite Stellung wechselt, wenn dieses eine vorgegebene Zeit mit Dampf beaufschlagt wurde, daß das Auslaßventil (57) einen Stößel (58) aufweist, der von einem in Abhängigkeit der Temperatur die Form verändernden Metallelement (59) axial verschiebbar ist und daß das Auslaßventil (57) von der Dampf-/Wassertemperatur am Wasserauslauf (54) des Durchlauferhitzers (7) bzw. am Steigrohr (9) steuerbar ist.

2. Kaffeemaschine nach Anspruch 1,
**dadurch gekennzeichnet,**
**daß** das Auslaßventil (57) und das Metallelement (59) in Rohrstücken (79, 80) ausgebildet sind, die ein gemeinsames Querrohr bilden.

3. Kaffeemaschine nach Anspruch 2,
**dadurch gekennzeichnet,**
**daß** das Metallelement (59) von einer "Form-Gedächtnis-Legierung" oder einem Bimetall gebildet ist.

4. Kaffeemaschine nach Anspruch 2,
**dadurch gekennzeichnet,**
**daß** der Stößel (58) von einer das Auslaßventil (57) in seine erste Stellung bringenden Rückstellfeder (60) beaufschlagt ist.

5. Kaffeemaschine nach Anspruch 2,
**dadurch gekennzeichnet,**
**daß** der mit dem Metallelement (59) versehene Abschnitt (61) des Stößels (58) von einer Hülse (62) umgeben ist, die über eine Öffnung (67) in den Kanal (68) des Rohrstutzens (63) hineinragt und daß die Hülse (62) an dem in den Kanal (68) hineinragenden Ende durch eine Wand (69) verschlossen ist, an der das Metallelement (59) zur Aufnahme der Temperatur anliegt.

6. Kaffeemaschine nach Anspruch 2,
**dadurch gekennzeichnet,**
**daß** an dem dem Metallelement (59) gegenüberliegenden Ende am Stößel (58) ein Dichtelement (70) ausgebildet ist, das in der Ausgangsstellung den großen Durchlaßquerschnitt (72) in der Leitung (66) verschließt.

7. Kaffeemaschine nach Anspruch 6,
**dadurch gekennzeichnet,**
**daß** in dem Rohrstutzen (64) eine Öffnung (73) ausgebildet ist, in die das Ventilgehäuse (74) des Auslaßventils (57) hineinragt und daß an dem Ventilgehäuse (74) sowohl der kleine (71) wie der große (72) Durchlaß ausgebildet ist.

8. Kaffeemaschine nach Anspruch 1,
**dadurch gekennzeichnet,**
**daß** vor der Dampfbeaufschlagung das Kaffeemehl (47) mit einer geringen Menge an Wasser (Vorlage) übergossen wird.

9. Kaffeemaschine nach Anspruch 1,
**dadurch gekennzeichnet,**
**daß** am Ausgang des Wasserbehälters (1) ein weiteres Auslaßventil vorgesehen ist, daß das weitere Auslaßventil (4) in seiner Grundstellung geschlossen und durch das Einschalten des Durchlauferhitzers (7) in eine Offenstellung mit kleinem Durchlaßquerschnitt (2) steuerbar ist.

## Claims

1. A coffee maker with a flow-through heater (7) having a water inlet (46) connected to a water reservoir (1; 12) through a check valve (6), and a water outlet (54) communicating through a riser (9) with a filtering device (10) receiving the coffee grinds (47), so that hot water that enters the filtering device (10) extracts aromatics from the coffee grinds (47) and is discharged as a coffee beverage from the filtering device (10) into a collection container (11), with a temperature controllable outlet valve (57) being arranged in the fluid path between the water reservoir (1; 12) and the riser (9), said outlet valve having in a first position a sectional area of orifice (71) dimensioned sufficiently small that water exiting said outlet valve evaporates completely in the flow-through heater (7), subsequently flowing as steam and a mixture of steam and hot water into the filtering device (10,) and having in a second position a sectional area of orifice (72) dimensioned at least sufficiently large that water exiting said outlet valve is heated in the flow-through heater (7) without appreciable development of steam, flowing into the filtering device (10),
**characterized in that** the outlet valve (57) is controlled by the temperature of the steam and does not switch into its second position until after it has been exposed to steam for a predetermined period of time, that the outlet valve (57) has a tappet (58) axially displaceable by a metal member (59) changing shape as a function of temperature, and that the outlet valve (57) is controllable by the steam/water temperature at the water outlet (54) of the flow-through heater (7) or at the riser (9).

2. The coffee maker according to claim 1,
**characterized in that** the outlet valve (57) and the metal member (59) are received in tube sections (79, 80) forming a common transverse tube.

3. The coffee maker according to claim 2,
**characterized in that** the metal member (59) is made of a material selected from the group consisting of a "shape memory alloy" or a bimetal.

4. The coffee maker according to claim 2,
**characterized in that** the tappet (58) is acted upon by a return spring (60) returning the outlet valve (57) to its first position.

5. The coffee maker according to claim 2,
**characterized in that** the section (61) of the tappet (58) provided with the metal member (59) is surrounded by a sleeve (62) projecting through an opening (67) into the channel (68) of the tubular section (63), and that said sleeve (62) has its one end which projects into the channel (68) sealed by a wall (69) which is engaged by the metal member (59) to pick up the temperature.

6. The coffee maker according to claim 2,
**characterized in that** a sealing element (70) is arranged at the end of the tappet (58) remote from the metal member (59), said sealing element closing in the initial position the large sectional area of orifice (72) in the conduit (66).

7. The coffee maker according to claim 6,
**characterized in that** in the tubular section (64) an opening (73) is formed into which the valve housing (74) of the outlet valve (57) extends, and that both the small (71) and the large (72) orifice are formed on the valve housing (74).

8. The coffee maker according to claim 1,
**characterized in that** a small amount of water (forerun) is poured over the coffee grinds (47) prior to their being contacted with steam.

9. The coffee maker according to claim 1,
**characterized in that** at the outlet of the water reservoir (1) provision is made for a further outlet valve, that said further outlet valve (4) is closed in its initial position and controllable into an open position with a small cross-sectional area of orifice (2) by the turning on of the flow-through heater (7).

## Revendications

1. Machine à café comportant un réchauffeur à traversée (7), dont l'entrée d'eau (46) est reliée par l'intermédiaire d'une soupape antiretour (6) au réservoir d'eau (1; 12) et dont la sortie pour l'eau (54) est reliée par l'intermédiaire d'un tube montant (9) à un filtre à café (10) servant à recevoir le café moulu (47), de sorte que de l'eau chaude pénétrant dans le filtre à café (10) réalise une extraction du café moulu (47) et s'écoule en tant que café et sort du filtre à café (10) en tant que café pour pénétrer dans un récipient de collecte (11), et dans lequel dans le trajet d'écoulement entre le récipient à eau (1; 12) et le tube montant (9) est disposée une soupape de sortie (56), qui est commandable par la température et qui, dans une première position, possède une petite section transversale de passage (71), qui est dimensionnée suffisamment faible pour que la quantité d'eau sortante s'évapore complètement dans le réchauffeur à traversée (7) et circule, à partir de là, sous la forme de vapeur ou sous la forme d'un mélange vapeur-eau chaude, dans le filtre à café (10), et qui, dans une seconde position, possède une grande section transversale de passage (12), qui est dimensionnée au moins avec une taille suffisamment grande pour que la quantité d'eau sortante soit chauffée dans le réchauffeur à traversée (7) sans dégagement notable de vapeur et pénètre dans le filtre à café (10), **caractérisée en ce que** la soupape de sortie (57) est commandée par la température de la vapeur et passe dans la seconde position uniquement lorsque cette soupape a été chargée par la vapeur pendant une durée prédéterminée, que la soupape de sortie (57) comporte un poussoir (58), qui est déplaçable axialement par un élément métallique (59) qui change de forme en fonction de la température, et que la soupape de sortie (57) peut être commandée par la température vapeur/eau présente à la sortie pour l'eau (54) du réchauffeur à traversée (7) ou dans le tube dans le tube montant (9).

2. Machine à café selon la revendication 1, **caractérisée en ce que** la soupape de sortie (57) et l'élément métallique (59) sont agencés sous la forme d'éléments tubulaires (79, 80), qui forment un tube transversal commun.

3. Machine à café selon la revendication 2, **caractérisée en ce que** l'élément métallique (59) est formé par un "alliage à mémoire de forme" ou par un élément bimétallique.

4. Machine à café selon la revendication 2, **caractérisée en ce que** le poussoir (58) est chargé par un ressort de rappel (60), qui place la soupape de sortie (57) dans sa première position.

5. Machine à café selon la revendication 2, **caractérisée en ce que** la partie (61), pourvue de l'élément métallique (59) et du poussoir (58) est entourée par une douille (62), qui pénètre par l'intermédiaire d'une ouverture (67) dans le canal (68) de la tubulure (63) et que la douille (62) est fermée, à l'extrémité pénétrant dans le canal (68) par une paroi (69), contre laquelle l'élément métallique (59) s'applique pour détecter la température.

6. Machine à café selon la revendication 2, **caractérisée en ce que** sur l'extrémité du poussoir (58), située à l'opposé de l'élément métallique (59) est formé un élément d'étanchéité (70) qui, dans la position de départ, ferme la grande section transversale de passage (70) dans la canalisation (66).

7. Machine à café selon la revendication 6, **caractérisée en ce que** dans la tubulure (64) est formée une ouverture (73), dans laquelle pénètre le boîtier (74) de la soupape de sortie (57), et qu'aussi bien le petit passage (71) que le grand passage (72) sont formés sur le boîtier de soupape (74).

8. Machine à café selon la revendication 1, **caractérisée en ce qu'**avant d'être chargée par la vapeur, le café moulu (47) noyé par une faible quantité d'eau (position amont).

9. Machine à café selon la revendication 1, **caractérisée en ce qu'**une soupape de sortie est prévue à la sortie du récipient à eau (1), que l'autre soupape de sortie (15) est fermée dans sa position de base et peut être commandée par le branchement du réchauffeur à traversée (7) pour se placer dans une position ouverte avec une faible section transversale de passage (2).
